# EUROPEAN PATENT SPECIFICATION

(11) **EP 3 734 205 B1**
(45) Date of publication and mention of the grant of the patent: **18.01.2023**
(21) Application number: 18894134.8
(22) Date of filing: 28.12.2018
(51) Int. Cl.: F25D 29/00, G06K 7/00

(54) **INTELLIGENT REFRIGERATOR AND INFORMATION REMINDER METHOD BASED ON INTELLIGENT REFRIGERATOR**
INTELLIGENTER KÜHLSCHRANK UND INFORMATIONSERINNERUNGSVERFAHREN AUF DER GRUNDLAGE EINES INTELLIGENTEN KÜHLSCHRANKS
RÉFRIGÉRATEUR INTELLIGENT ET PROCÉDÉ DE RAPPEL D'INFORMATIONS BASÉ SUR UN RÉFRIGÉRATEUR INTELLIGENT

(30) Priority: 29.12.2017 CN 201711489687
(43) Date of publication of application: 04.11.2020
(73) Proprietor: Haier Smart Home Co., Ltd., Qingdao, Shandong 266101 (CN); Qingdao Haier Special Refrigeration Electric Appliance Co., Ltd., Shandong 266426 (CN)
(72) Inventor: ZHANG, Lei, Qingdao, Shandong 266101 (CN); WU, Yong, Qingdao, Shandong 266101 (CN); DANG, Guangming, Qingdao, Shandong 266101 (CN); WANG, Bing, Qingdao, Shandong 266101 (CN); ZHAO, Qinghai, Qingdao, Shandong 266101 (CN)
(74) Representative: Ziebig Hengelhaupt Intellectual Property Attorneys Patentanwaltsanwaltskanzlei PartGmbB
(86) International application number: PCT/CN2018/125063
(87) International publication number: WO 2019/129248

(56) References cited:
- WO-A1-2009/022416
- CN-A- 1 690 625
- CN-A- 102 012 146
- CN-A- 103 322 767
- CN-A- 103 884 152
- CN-A- 104 866 880
- CN-A- 105 117 450
- CN-A- 105 809 310
- CN-A- 106 871 567
- CN-A- 107 062 794
- CN-A- 107 062 794
- CN-A- 107 101 452
- CN-A- 108 302 892
- JP-A- 2003 022 364
- US-B2- 9 449 208

## Description

### FIELD OF THE INVENTION

The present invention relates to an intelligent household appliance, and more particularly relates to an intelligent refrigerator and an information reminding method based on the intelligent refrigerator.

### BACKGROUND OF THE INVENTION

A refrigerator is a household appliance for keeping food or other articles in a constant low-temperature cold state. Till now, a refrigeration refrigerator has already become a necessary electric appliance in a family. With improvement of the quality of life of people, users also have higher requirements on intelligent functions of the refrigerator.

According to the intelligent refrigerator in the prior art, articles placed in the refrigerator may be managed through technologies such as electronic tags and image recognition, for example, article consumption reminding and storage time reminding may be carried out. Some intelligent refrigerators may even provide functions such as diet collocation reminding and recipe recommendation. However, these functions are generally based on analysis and management on the articles stored in the refrigerator, but use feelings of a user are not fully considered, so that the safety of using the articles in the refrigerator by the user may not be guaranteed.

JP 2003 022364 A relates to the management computer for refrigerators which performs the date management of the preserved food in a refrigerator.

CN 105 809 310 A relates to a food safety detection method and food safety detection system.

### BRIEF DESCRIPTION OF THE INVENTION

The invention is defined by the independent claims. Preferred embodiments are defined by the dependent claims.

An objective of the present invention is to remind a user that a picked or placed article is not suitable to use.

A further objective of the present invention is to guarantee the safety and health of using articles stored in a refrigerator by the user.

A yet another objective of the present invention is to improve use experience of the user.

Particularly, the present invention provides an information reminding method based on an intelligent refrigerator, comprising:
acquiring an article pick-up and placement event of the intelligent refrigerator;
when the article pick-up and placement event occurs, collecting information of an article, which has changed, in the intelligent refrigerator;
carrying out data matching on the information of the article and a dangerous article information base, wherein the dangerous article information base pre-stores a list of articles which a user is recommended to stop using, wherein
the list of articles in the dangerous article information base comprises
   (1) products belonging to a commodity recorded in a list of negative commodities, and a generation process of the list of negative commodities comprises the following steps:
      connecting a network, and capturing negative commodity information from an unqualified commodity notification webpage issued by a commodity supervision and management department; and
      storing the negative commodity information into the list of negative commodities according to a preset data format,
   (2) a list of forbidden articles for a user, and a generation process of the list of forbidden articles for a user comprises the following steps:
      collecting body index data of the user, and analyzing a health state of the user according to the body index data; and generating the list of forbidden articles for a user according to the health state so as to list out articles recommended not to be used by the user in the health state,
   (3) a list of expired articles, and a generation process of the list of expired articles comprises the following steps:
      acquiring storage conditions of the articles stored in the intelligent refrigerator, and determining an appropriate storage life of the articles under the storage conditions; and generating the list of expired articles according to the appropriate storage life; and
      if a matching result is that the article which has changed is an article in the list of articles, outputting reminding information. Optionally, the step of collecting information of the article, which has changed, in the intelligent refrigerator includes the sub-steps of obtaining attribute information of the article by reading label information on the article or carrying out image recognition on the article; and recording article pick-up and placement time to obtain time information of the article.

Optionally, the dangerous article information base is stored in cloud equipment. Additionally, the step of carrying out data matching on the information of the article and the dangerous article information base includes the sub-steps of uploading the information of the article to the cloud equipment, and carrying out data matching by the cloud equipment by using the dangerous article information base; and receiving a matching result returned by the cloud equipment.

Optionally, the reminding information is output in any one of the following modes of outputting a reminding interface by using a display screen of the intelligent refrigerator; outputting a reminding audio by using audio equipment of the intelligent refrigerator; sending reminding information to a management terminal of the intelligent refrigerator; or sending reminding information to intelligent household appliance equipment in data connection with the intelligent refrigerator so that the reminding information is output by the intelligent household appliance equipment.

Optionally, if the matching result is that the article which has changed is not an article in the list of articles, the current article pick-up and placement event and the information of the article are recorded, so that article consumption conditions of the user may be subsequently analyzed.

According to another aspect, the present invention also provides an intelligent refrigerator, as defined in claim 6.

Optionally, the data processing device includes a network module. The network module is configured to upload the information of the article in the intelligent refrigerator of the present invention to the cloud equipment so as to carry out data matching by the cloud equipment of the present invention by using the dangerous article information base stored in the cloud equipment, and is configured to receive a matching result returned by the cloud equipment of the present invention.

According to another aspect, the present invention also provides a computer-readable storage medium, as defined in claim 8.

According to the intelligent refrigerator and the information reminding method based on the intelligent refrigerator of the present invention, after occurrence of the article pick-up and placement event of the refrigerator is determined, the information of the article which has changed (including the information of the article newly placed into the refrigerator and the information of the article picked up from the refrigerator) is collected, and is subjected to data matching with the preset dangerous article information base, so that the user is reminded in a timely manner if the article is in the list of articles which the user is recommended to stop using, and the user stops using the article; potential safety hazards, e.g. misuse of forbidden products or use of unqualified products are prevented; and the safety of the user is guaranteed. The intelligent refrigerator becomes a management system for storing the articles by the user, and provides a guarantee for improving the quality of life of the user.

Further, according to the intelligent refrigerator and the information reminding method based on the intelligent refrigerator of the present invention, the dangerous article information base builds a plurality of lists of articles which the user are recommended to stop using, including the list of negative commodities, the list of forbidden articles for a user and the list of expired articles. The safety of using the articles by the user is protected from different aspects. By using a data analysis function, a technical means is provided for the intelligent life of the user.

Further, the intelligent refrigerator and the information reminding method based on the intelligent refrigerator of the present invention provide more intelligent means to interact with the user and provide good use interaction experience for the user.

These and other objectives, advantages and features of the present invention will become more apparent to those skilled in the art from the following detailed description of specific embodiments of the present invention with reference to the accompanying drawings hereafter.

### BRIEF DESCRIPTION OF THE DRAWINGS

Some specific embodiments will be described in detail hereinafter, in an exemplary but non-limiting way, with reference to the accompanying drawings. The same reference numerals will be used throughout the drawings to refer to the same or similar components or parts. It should be appreciated by those skilled in the art that the drawings are not necessarily drawn to scale. In the drawings:
Figure 1 is a schematic functional block diagram of an intelligent refrigerator;
Figure 2 is a schematic diagram of a reminding component of an intelligent refrigerator;
Figure 3 is a schematic diagram of a use environment of an intelligent refrigerator;
Figure 4 is a schematic diagram of an information reminding method of an intelligent refrigerator; and
Figure 5 is a schematic diagram of a computer storage medium.

### DETAILED DESCRIPTION

A plurality of storage chambers may be disposed in a refrigerator body of an intelligent refrigerator 100 according to a present embodiment. Each storage chamber may store articles in the storage chamber according to a set storage environment. Various kinds of sensing equipment and information collection equipment, such as a temperature sensor, a humidity sensor, a weight sensor, a camera and a label reading device, are disposed in each storage chamber, and are configured to sense and measure the storage environment and stored articles in the chamber to obtain relevant information.

The intelligent refrigerator 100 may be further provided with a display screen and voice equipment for carrying out interaction with a user, and may have a network transmission function. In some embodiments, the intelligent refrigerator 100 can be provided with a touch control screen with an operating system on a door body, and may carry out data interaction with other equipment or network cloud equipment in a transmission mode such as Wi-Fi, GPRS and Bluetooth. On the basis, the intelligent refrigerator 100 of the present embodiment may automatically remind whether an article is suitable for a user to use, and may carry out corresponding reminding.

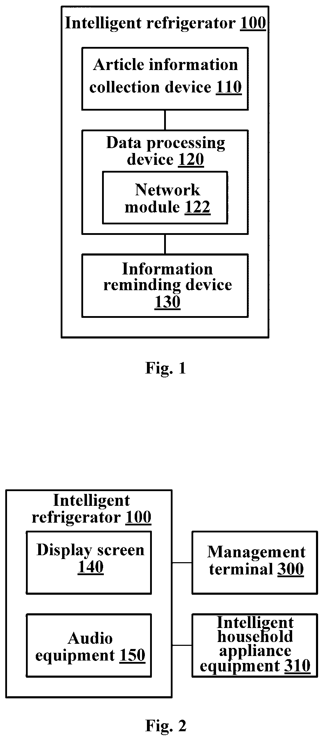

Figure 1 is a schematic functional block diagram of an intelligent refrigerator 100 according to an embodiment. The intelligent refrigerator 100 may generally include an article information collection device 110, a data processing device 120 and an information reminding device 130, wherein the data processing device 120 may further include a network module 122.

The article information collection device 110 collects information of an article, which has changed, in the intelligent refrigerator 100 after the article pick-up and placement event of the intelligent refrigerator 100 occurs. The article information collection device 110 may detect a door opening action of the refrigerator by a door opening detection device such as a door body switch, and obtain article attribute information such as a type, a specification, a weight and a shelf life of the article in modes of carrying out image recognition on images shot through the camera, reading label information (RFID or identification code) of the article and the like. Additionally, the article information collection device 110 may also record the pick-up and placement time of the article to obtain time information of the article, so that the storage time of the article can be determined through statistics. The article information collection device 110 may respectively collect the information of the article newly placed into the intelligent refrigerator 110 and the information of the article picked up from the intelligent refrigerator 100.

The data processing device 120 is configured to process and analyze data of the intelligent refrigerator 110, such as carrying out statistics on storage conditions of the article in the refrigerator, and generating a statistical list for the user to check. In the refrigerator according to the present embodiment, the data processing device 120 carries out data matching on the information of the article and a dangerous article information base. The dangerous article information base pre-stores a list of articles which the user is recommended to stop using.

The list of articles includes a list of negative commodities, a list of forbidden articles for a user and a list of expired articles. The list of negative commodities is configured to record information of commodities with negative information, such as an issued list of unqualified products. The list of forbidden articles for a user is configured to record information of articles unsuitable for the user to use in a current health state, such as sugar-containing food unsuitable for a diabetic patient to eat, cold drink ice cream unsuitable for women in a menstrual period to eat, etc. The list of expired articles is configured to record articles with expired storage time in the refrigerator. The lists of articles may be selected to be used according to requirements, and may be dynamically regulated.

The information reminding device 130 is configured to output reminding information if a matching result is that the article which has changed is an article in the list of articles. Contents of the reminding information include: information of the article, a reason why the article is unsuitable for the user to use, and a recommended processing mode. For example, for the article in the list of negative commodities, the information reminding device 130 may remind the user of doing changing or refunding, and output a relevant unqualified reason. For the article in the list of forbidden articles for a user, the information reminding device 130 may remind the user of health risk. For commodities in the list of expired articles, the information reminding device 130 may remind the user of throwing away the article, and the like.

Figure 2 is a schematic diagram of a reminding component of an intelligent refrigerator 100 according to an embodiment. The information reminding device 130 may carry out reminding in the following modes: outputting a reminding interface by a display screen 140 of the intelligent refrigerator 100; outputting a reminding audio by using audio equipment 150 of the intelligent refrigerator 100; sending reminding information to a management terminal 300 of the intelligent refrigerator 100 (for example, sending the reminding information to a pre-bound intelligent mobile phone of the user); and sending the reminding information to intelligent household appliance equipment 310 in data connection with the intelligent refrigerator 100 so that the reminding information is output by the intelligent household appliance equipment 310 (for example, using an intelligent television, computer equipment, an intelligent sound box and the like in interconnection with the intelligent refrigerator 100 in a home local area network for sending the reminding information, that is, the intelligent household appliance equipment 310 may be the intelligent television, the computer equipment, the intelligent sound box and the like).

If a matching result is that the article which has changed is not an article in the list of articles, the data processing data 120 may record the current article pick-up and placement event and the information of the article, so that article consumption conditions of the user may be subsequently analyzed.

The data processing device 120 may carry out data processing by using cloud equipment 200. The dangerous article information base may be stored in the cloud equipment 200. The network module 122 may be configured to upload the information of the article in the intelligent refrigerator to the cloud equipment 200 so that the cloud equipment 200 carries out data matching by using the dangerous article information base stored in the cloud equipment; and configured to receive a matching result returned by the cloud equipment 200 .

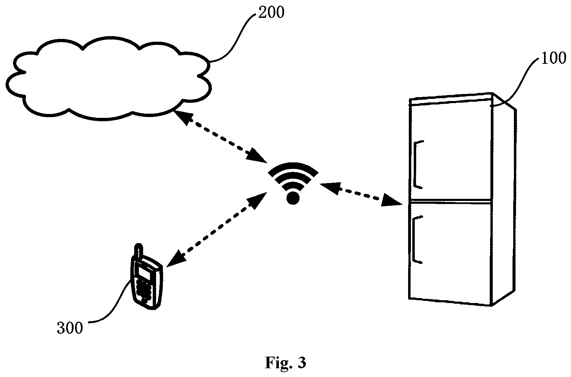

Figure 3 is a schematic diagram of a use environment of an intelligent refrigerator 100 according to an embodiment . The intelligent refrigerator 100 uses the network module 122 to carry out data interaction with the cloud equipment 200, and uses advantages of cloud big data to carry out data matching on the information of articles and the dangerous article information base. The cloud equipment 200 returns a matching result. If the matching result is that the article picked up or placed by the user is unsuitable for the user to use, reminding information is sent to the management terminal 300 to remind the user of an article use risk.

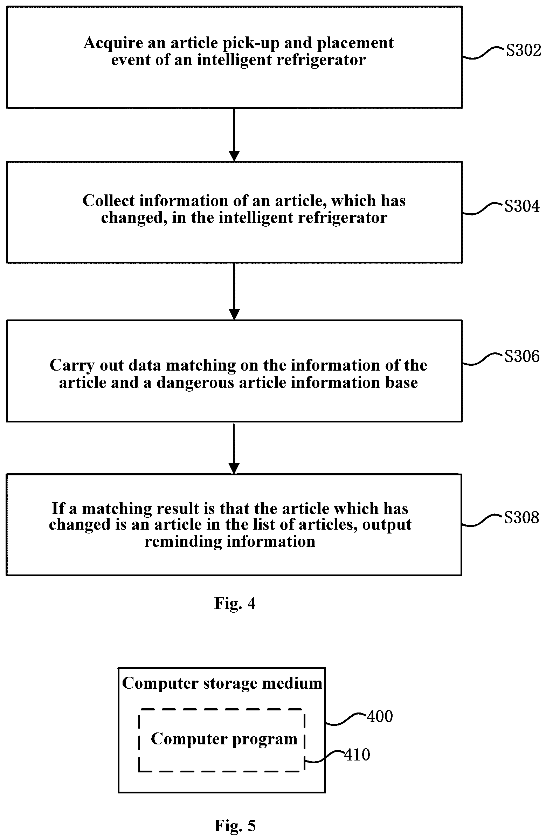

The present embodiment further provides an information reminding method of an intelligent refrigerator. The information reminding method is realized by the intelligent refrigerator 100 according to the embodiments. An operation principle of the intelligent refrigerator 100 of the present embodiment will be illustrated with reference to the description of the information reminding method of the intelligent refrigerator. Figure 4 is a schematic diagram of the information reminding method of an intelligent refrigerator according to an embodiment . The information reminding method of the intelligent refrigerator includes the following steps:
Step S302: An article pick-up and placement event of the intelligent refrigerator 100 is acquired. For example, article pick-up and placement detection may be carried out after the intelligent refrigerator 100 determines that a door body is opened.
Step S304: After the article pick-up and placement event occurs, information of an article, which has changed, in the intelligent refrigerator 100 is collected. Attribute information of the article may be obtained by reading label information on the article or carrying out image recognition on the article, and time information of the article is obtained by recording the pick-up and placement time of the article. For example, the intelligent refrigerator 100 may determine the information of the article which has changed by reading the label change of the article in a storage chamber before door opening and closing by an RFID reading device; and for example, the intelligent refrigerator 100 may determine the information of the article which has changed by carrying out image recognition on images of the article shot in a door opening period. The door opening and closing time of the refrigerator is used as the article pick-up and placement time.
Step S306: Data matching is carried out on the information of the article and the dangerous article information base. The dangerous article information base pre-stores a list of articles which the user is recommended to stop using. The list of articles includes a list of negative commodities, a list of forbidden articles for a user and a list of expired articles. A data matching process may be carried by using a cloud big data process, for example, the dangerous article information base may be stored in the cloud equipment 200; firstly, the information of the article is uploaded to the cloud equipment 200; the cloud equipment 200 carries out data matching by using the dangerous article information base; and a matching result returned by the cloud equipment 200 is received.
Step S308: If the matching result is that the article which has changed is an article in the list of articles, reminding information is output. The reminding information is output in any one of the following modes of outputting a reminding interface by using the display screen 140 of the intelligent refrigerator 100; outputting a reminding audio by using the audio equipment 150 of the intelligent refrigerator 100; sending the reminding information to the management terminal 300 of the intelligent refrigerator 100; or sending the reminding information to the intelligent household appliance equipment 310 in data connection with the intelligent refrigerator 100 so that the reminding information is output by the intelligent household appliance equipment 310. If the matching result is that the article which has changed is not an article in the list of articles, the current article pick-up and placement event and the information of the article are recorded, so that article consumption conditions of the user may be subsequently analyzed.

The matching results of different kinds of lists of articles and processing modes are respectively and further described as follows:
For the list of negative commodities, a source of the list of negative commodities may be from an unqualified commodity notification issued by a commodity supervision and management department. A process of generating the list of negative commodities includes the steps of connecting a network; capturing information of negative commodities from an unqualified commodity notification webpage issued by the commodity supervision and management department by using a network information crawling technology; and storing the information of negative commodities into the list of negative commodities according to a preset data format. The unqualified commodity notification webpage may be, for example, webpage data of a commodity exposure platform of a national food and drug supervision and management department or a consumer rights protection department. The information of the webpages may be regularly scanned, and updated contents may be regularly added to the list of negative commodities.

Webpage and data formats of different webpage platforms may be nonuniform, so that after being captured, the information of the negative commodities may be subjected to unification processing and stored into the list of the negative commodities according to a preset data format. Table 1 is an optional form of the list of negative commodities. In a practical use process, data format making may be carried out according to concrete requirements.

**Table 1**

| Commodity name | Manufacturer or vendor | Unqualified index | Unqualified batch | Detection organization |
|---|---|---|---|---|
| ** fruit-flavored beverage | ^{∗∗} fruit juice factory | Total bacterial count | October, 2017 | ^{∗∗} detection laboratory |
| Vegetable | ^{∗∗} market | Insects | October, 2017 | ^{∗∗} detection laboratory |
| ^{∗∗} meat | ^{∗∗} slaughter house | Water-injected | October, 2017 | ^{∗∗} detection laboratory |
| ... | ... | ... | ... | ... |

If the intelligent refrigerator 100 collects information that a newly placed article includes a fruit-flavored beverage during door opening in a time, and discovers that the fruit-flavored beverage belongs to a commodity recorded in the list of negative commodities in the matching process of information of the fruit-flavored beverage and the list of negative commodities in the dangerous article information base, the reminding information may be sent to the user at the moment, and a link of an unqualified commodity notification webpage is called to be sent to the user so as to remind the user of doing changing or refunding.

For the list of forbidden articles for a user, body index data of the user is collected in advance, and a health state of the user is analyzed according to the body index data. The list of forbidden articles for a user is generated according to the health state so as to list out articles which the user is recommended not to use in the health state. The body index data of the user may be obtained by wearable equipment or body measuring equipment, or may be obtained by analyzing life habits of the user. For example, approximate health conditions of the user may be obtained by collecting work and rest time and habits of the user in a period of time. Whether a female user is in a menstrual period or not is judged. If a result that the female user is in the menstrual period is determined, a male user may be reminded to give care to the female user, etc., and if cold drinks or ice cream is picked up in this period, the intelligent refrigerator reminds the user that the cold drinks or the ice cream is unsuitable to eat, and reminds the female user of paying attention to keeping warm. If the food is picked up by the male user, the intelligent refrigerator reminds the male user of not giving cold food materials to the female user. Similarly, spicy food materials are also forbidden in this period.

For the list of expired articles, storage conditions for storing the articles by the intelligent refrigerator 100 is obtained, and an appropriate storage life of the articles under the storage conditions is determined; and the list of expired articles is generated according to the appropriate storage life. For example, the appropriate storage life of fishes in an environment of -5 to 0°C is 36 h, if the fishes are stored in the intelligent refrigerator for more than 36 h, the fishes may be placed into the list of expired articles, and reminding is carried out when the user picks up or places the article.

According to the information reminding method of the intelligent refrigerator according to the present embodiment, when the step S306 is executed, a plurality of lists of articles in the dangerous article information base is respectively matched at the same time; and if the condition that the information of the article is matched with any one list of articles occurs, the reminding information is output.

Additionally, in a process that the user places food into the refrigerator, a scanner disposed on the door body of the refrigerator or a refrigerator body may be used for scanning a two-dimensional code or a bar code on a food material package, so that information, such as a trademark, a name, a supermarket from which the food is bought, etc., of the food is obtained. After the two-dimensional code is scanned, a scanning result may be displayed on the display screen 140 of the refrigerator for the user to confirm; if an obtained result is that the information does not have problems, the user confirms information entry; and if the result is that the scanned information is wrong, the user may manually modify the information, so that an error-tolerant rate in a recognition process of the refrigerator is improved.

Automatic information entry may be carried out in the food scanning process, and the trademark, a buying source and the like of the food are recorded for subsequent information matching.

Figure 5 is a schematic diagram of a computer storage medium 400 according to an embodiment. The computer storage medium 400 stores computer program 410. The computer program 410 is used for executing the information reminding method of the intelligent refrigerator according to any one of the above embodiments after running.

By using the information reminding method based on the intelligent refrigerator according to the above embodiments, when the article is in the list of articles which the user is recommended to stop using, the user is reminded in a timely manner of stopping using the article so as to prevent potential safety hazards, e.g. misusing forbidden products or using unqualified products, so that the safety of the user is guaranteed. The intelligent refrigerator 100 becomes a management system for storing the articles by the user, and provides the guarantee for improving the life quality of the user. The safety of using the articles by the user is protected from different aspects. By using a data analysis function, a technical guarantee is provided for the intelligent life of the user.

## Claims

1. An information reminding method based on an intelligent refrigerator, comprising:
acquiring (S302) an article pick-up and placement event of the intelligent refrigerator;
when the article pick-up and placement event occurs, collecting (S304) information of an article, which has changed, in the intelligent refrigerator;
carrying (S306) out data matching on the information of the article and a dangerous article information base, wherein the dangerous article information base pre-stores a list of articles which a user is recommended to stop using, wherein
the list of articles in the dangerous article information base comprises
(1) products belonging to a commodity recorded in a list of negative commodities, and a generation process of the list of negative commodities comprises the following steps:
connecting a network, and capturing negative commodity information from an unqualified commodity notification webpage issued by a commodity supervision and management department; and
storing the negative commodity information into the list of negative commodities according to a preset data format,
(2) a list of forbidden articles for a user, and a generation process of the list of forbidden articles for a user comprises the following steps:
collecting body index data of the user, and analyzing a health state of the user according to the body index data; and generating the list of forbidden articles for a user according to the health state so as to list out articles recommended not to be used by the user in the health state,
(3) a list of expired articles, and a generation process of the list of expired articles comprises the following steps:
acquiring storage conditions of the articles stored in the intelligent refrigerator, and determining an appropriate storage life of the articles under the storage conditions; and generating the list of expired articles according to the appropriate storage life; and
if a matching result is that the article which has changed is an article in the list of articles, outputting (S308) reminding information.

2. The method according to claim 1, wherein the step of collecting information of the article, which has changed, in the intelligent refrigerator comprises the following sub-steps:
obtaining attribute information of the article by reading label information on the article or carrying out image recognition on the article; and
recording article pick-up and placement time to obtain time information of the article.

3. The method according to claim 1, wherein
the dangerous article information base is stored in cloud equipment (200), and, the step of carrying out data matching on the information of the article and the dangerous article information base comprises the following sub-steps:
uploading the information of the article to the cloud equipment, and carrying out data matching by the cloud equipment by using the dangerous article information base; and
receiving a matching result returned by the cloud equipment.

4. The method according to any one of claims 1 to 3, wherein the reminding information is output in any one of the following modes:
outputting a reminding interface by using a display screen (140) of the intelligent refrigerator;
outputting a reminding audio by using an audio equipment (150) of the intelligent refrigerator;
sending the reminding information to a management terminal (300) of the intelligent refrigerator; or
sending the reminding information to an intelligent household appliance equipment (310) in data connection with the intelligent refrigerator so that the reminding information is output by the intelligent household appliance equipment.

5. The method according to any one of claims 1 to 3, wherein
if the matching result is that the article which has changed is not an article in the list of articles, the current article pick-up and placement event and the information of the article are recorded, so that article consumption conditions of the user is subsequently analyzed.

6. An intelligent refrigerator configured to carry out the method according to claim 1, comprising:
an article information collection device (110) configured to collect information of an article, which has changed, in the intelligent refrigerator after an article pick-up and placement event of the intelligent refrigerator occurs;
a data processing device (120);
an information reminding device (130), configured to output reminding information if a matching result is that the article which has changed is an article in the list of articles.

7. The intelligent refrigerator according to claim 6, wherein the data processing device comprises:
a network module, configured to upload the information of the article to cloud equipment (200) so as to carry out data matching by the cloud equipment by using the dangerous article information base stored in the cloud equipment; and configured to receive a matching result returned by the cloud equipment.

8. A computer-readable storage medium (400), storing computer program (410), wherein the computer program is used for executing the information reminding method of the intelligent refrigerator according to any one of claims 1 to 5 after running.

## Patentansprüche

1. Informationserinnerungsverfahren basierend auf einem intelligenten Kühlschrank, umfassend:
Erfassen eines Artikelaufnahme- und Platzierungsereignisses des intelligenten Kühlschranks;
wenn das Artikelaufnahme- und Platzierungsereignis auftritt, Sammeln von Informationen über einen Artikel, der sich geändert hat, in dem intelligenten Kühlschrank;
Durchführen eines Datenabgleichs der Informationen des Artikels und einer Informationsbasis für gefährliche Artikel, wobei die Informationsbasis für gefährliche Artikel eine Liste von Artikeln vorspeichert, deren Verwendung einem Benutzer empfohlen wird, nicht mehr zu verwenden,
wobei
die Liste der Artikel in der Informationsbasis für gefährliche Artikel umfasst
(1) eine Liste negativer Waren, und ein Erstellungsprozess der Liste negativer Waren umfasst die folgenden Schritte:
Anschließen eines Netzwerks und Aufnehmen negativer Wareninformationen von einer unqualifizierten Warenbenachrichtigungs-Webseite, die von einer Warenüberwachungs- und Verwaltungsabteilung herausgegeben wird; und
Speichern der negativen Wareninformationen in der Liste negativer Waren gemäß einem voreingestellten Datenformat,
(2) eine Liste verbotener Artikel für einen Benutzer und ein Generierungsprozess der Liste verbotener Artikel für einen Benutzer umfasst die folgenden Schritte:
(3) Sammeln von Körperindexdaten des Benutzers und Analysieren eines Gesundheitszustands des Benutzers gemäß den Körperindexdaten; und Generieren der Liste verbotener Artikel für einen Benutzer gemäß dem Gesundheitszustand, um somit Artikel aufzulisten, deren Verwendung durch den Benutzer in dem Gesundheitszustand nicht empfohlen wird, eine Liste abgelaufener Artikel, und ein Generierungsprozess der Liste abgelaufener Artikel umfasst die folgenden Schritte:
Erfassen von Lagerbedingungen der in dem intelligenten Kühlschrank gelagerten Artikel, und Bestimmen einer angemessenen Lagerdauer der Artikel unter den Lagerbedingungen; und Generieren der Liste abgelaufener Artikel gemäß der entsprechenden Haltbarkeitsdauer; und
wenn ein Übereinstimmungsergebnis darin besteht, dass der Artikel, der sich geändert hat, ein Artikel in der Artikelliste ist, Ausgeben von Erinnerungsinformationen.

2. Verfahren nach Anspruch 1, wobei der Schritt des Sammelns von Informationen des Artikels, der sich geändert hat, in dem intelligenten Kühlschrank die folgenden Unterschritte umfasst:
Erhalten von Attributinformationen des Artikels durch Lesen von Etiketteninformationen auf dem Artikel oder Durchführen einer Bilderkennung auf dem Artikel; und
Aufzeichnen der Aufnahme- und Platzierungszeit des Artikels, um Zeitinformationen des Artikels zu erhalten.

3. Verfahren nach Anspruch 1, wobei
die Informationsbasis für gefährliche Artikel in einer Cloud-Einrichtung gespeichert ist und der Schritt des Durchführens eines Datenabgleichs der Informationen des Artikels und der Informationsbasis für gefährliche Artikel die folgenden Unterschritte umfasst:
Hochladen der Informationen des Artikels in die Cloud-Einrichtung und Durchführen eines Datenabgleichs durch die Cloud-Einrichtung unter Verwendung der Informationsbasis für gefährliche Artikel; und
Empfangen eines Übereinstimmungsergebnisses, das von der Cloud-Einrichtung zurückgegeben wird.

4. Verfahren nach einem der Ansprüche 1 bis 3, wobei die Erinnerungsinformationen in irgendeinem der folgenden Modi ausgegeben werden:
Ausgeben einer Erinnerungsschnittstelle unter Verwendung eines Anzeigebildschirms des intelligenten Kühlschranks;
Ausgeben eines Erinnerungsaudios unter Verwendung einer Audioeinrichtung des intelligenten Kühlschranks;
Senden der Erinnerungsinformationen an ein Verwaltungsterminal des intelligenten Kühlschranks; oder
Senden der Erinnerungsinformationen an eine intelligente Haushaltsgeräteeinrichtung in Datenverbindung mit dem intelligenten Kühlschrank, sodass die Erinnerungsinformationen von der intelligenten Haushaltsgeräteeinrichtung ausgegeben werden.

5. Verfahren nach einem der Ansprüche 1 bis 3, wobei,
wenn das Übereinstimmungsergebnis lautet, dass der Artikel, der sich geändert hat, kein Artikel in der Artikelliste ist, das aktuelle Artikelaufnahme- und Platzierungsereignis und die Informationen des Artikels aufgezeichnet werden, sodass die Artikelverbrauchsbedingungen des Benutzers anschließend analysiert werden.

6. Intelligenter Kühlschrank, umfassend:
eine Artikelinformations-Sammelvorrichtung, die dazu konfiguriert ist, Informationen über einen Artikel, der sich geändert hat, in dem intelligenten Kühlschrank zu sammeln, nachdem ein Artikelaufnahme- und Platzierungsereignis des intelligenten Kühlschranks auftritt;
eine Datenverarbeitungsvorrichtung, eingerichtet, um das Verfahren nach Anspruch 1 auszuführen; und
eine Informationserinnerungsvorrichtung, die so konfiguriert ist, dass sie Erinnerungsinformationen ausgibt, wenn ein Übereinstimmungsergebnis darin besteht, dass der Artikel, der sich geändert hat, ein Artikel in der Artikelliste ist.

7. Intelligenter Kühlschrank nach Anspruch 6, wobei die Datenverarbeitungsvorrichtung umfasst:
ein Netzwerkmodul, das dazu konfiguriert ist, die Informationen des Artikels auf eine Cloud-Einrichtung hochzuladen, um somit einen Datenabgleich durch die Cloud-Einrichtung durchzuführen, indem die in der Cloud-Einrichtung gespeicherte Informationsbasis für gefährliche Artikel verwendet wird; und dazu konfiguriert ist, um ein Übereinstimmungsergebnis zu empfangen, das von der Cloud-Einrichtung zurückgegeben wird.

8. Computerspeichermedium, das ein Computerprogramm speichert, wobei das Computerprogramm zum Durchführen des Informationserinnerungsverfahrens des intelligenten Kühlschranks nach einem der Ansprüche 1 bis 5 verwendet wird, nachdem es ausgeführt wird.

## Revendications

1. Procédé de rappel d'informations basé sur un réfrigérateur intelligent, comprenant:
l'acquisition (S302) d'un événement de prélèvement et de placement de produit dans le cadre du réfrigérateur intelligent;
lorsque l'événement de prélèvement et de placement de produit a lieu, collecter (S304) des informations sur le produit, qui a changé, dans le réfrigérateur intelligent;
Effectuer (S306) la mise en correspondance des informations sur le produit et une base de données sur les produits dangereux, dans lequel la base de données sur les produits dangereux pré-stocke au préalable une liste de produits qu'on conseille à l'utilisateur d'éviter, dans lequel
la liste de produits dans la base de données sur les produits dangereux comprend :
(1) des produits appartenant à des produits de consommation enregistrés dans une liste de produits nocifs et un processus de génération de la liste de produits nocifs comprend les étapes suivantes:
se connecter à un réseau et recueillir des informations sur les produits de consommation nocifs à partir d'une notification de page Web sur les produits de consommation non qualifiés, publiée par un service de supervision et de gestion de produits; et
stocker les informations sur les produits de consommation nocifs dans la liste de produits de consommation nocifs selon un format de données prédéfini,
(2) une liste de produits interdits pour un utilisateur, et un processus de génération de la
liste de produits interdits pour un utilisateur comprend les étapes suivantes:
recueillir des données sur d'indice de masse corporelle de l'utilisateur et analyser un état de santé de l'utilisateur selon les données de l'indice de masse corporelle; et
générer la liste de produits interdits pour un utilisateur en fonction de l'état de santé afin de répertorier les produits qu'on conseille à l'utilisateur d'éviter dans l'état de santé,
(3) une liste
de produits périmés et un processus de génération de la liste de produits périmés comprend les étapes suivantes :
obtenir des conditions de stockage des produits stockés dans le
réfrigérateur intelligent et déterminer la durée de conservation appropriée des produits dans les conditions de stockage; et générer la liste de produits périmés en fonction de la durée de conservation appropriée; et
si un résultat de correspondance existe et que le produit qui a changé est un produit de la liste de produits, sortir (S308) un rappel d'informations.

2. Le procédé selon la revendication 1, dans lequel l'étape de recueillir des informations sur le produit, qui a changé, dans le réfrigérateur intelligent comprend les sous-étapes suivantes :
obtenir des données d'attribut sur le produit en lisant les données apposées sur l'étiquette du produit ou effectuer la reconnaissance d'image du produit; et enregistrer le
moment de prélèvement et de placement de produit pour obtenir des données sur la durée de l'article .

3. Le procédé selon la revendication 1, dans lequel
la base de données sur les produits dangereux est stockée dans un équipement cloud (200), et,
l'étape consistant à effectuer une mise en correspondance des données sur le produit et la base de données sur les produits dangereux comprend les sous-étapes suivantes:
uploader des données sur le produit vers l'équipement cloud et mettre en correspondance des données par l'équipement cloud à l'aide de la base de données sur les produits dangereux; et
recevoir un résultat de correspondance renvoyé par l'équipement cloud.

4. Le procédé selon l'une quelconque des revendications 1 à 3, dans lequel le rappel d'informations est produit par l'un des procédés suivants :
sortir une interface de rappel à l'aide d'un écran d'affichage (140) du réfrigérateur
intelligent ;
sortir un son de rappel à l'aide d'un équipement audio (150) du réfrigérateur
intelligent ;
envoyer rappel d'information à un terminal de gestion (300) du réfrigérateur intelligent; ou
envoyer rappel d'informations à un équipement électroménager intelligent (310)
en connexion de données avec le réfrigérateur intelligent de sorte que le rappel d'informations est transmis par l'équipement électroménager intelligent.

5. Le procédé selon l'une quelconque des revendications 1 à 3, dans lequel
si le résultat de correspondance existe et que le produit qui a changé n'est pas un produit de la liste de produits, l'événement de prélèvement et de placement de produit en cours et les données sur le produit sont enregistrés, de sorte que les conditions de consommation du produit par l'utilisateur sont ensuite analysées.

6. Un réfrigérateur intelligent configuré pour réaliser le procédé selon la revendication 1,comprenant:
un dispositif de collecte d'information sur les produits (110) configuré pour recueillir des informations sur un produit, qui a changé, dans le réfrigérateur intelligent après qu'un événement de prélèvement et de placement de produit a lieu dans le réfrigérateur intelligent;
un dispositif de traitement de données (120);
un dispositif de rappel d'informations (130), configuré pour émettre un rappel d'informations dans le cas où un résultat de correspondance existe et que le produit qui a changé est un produit de la liste d'articles.

7. Le réfrigérateur intelligent selon la revendication 6, dans lequel le dispositif de traitement de données comprend:
un module réseau, configuré pour uploader des informations sur le produit vers l'équipement cloud (200) afin d'effectuer la mise en correspondance des données par l'équipement cloud en utilisant la base de données sur les produits dangereux stockée dans l'équipement cloud; et configuré pour recevoir un résultat de correspondance renvoyé par l'équipement cloud.

8. Un moyen de stockage lisible par ordinateur (400), un programme informatique
de stockage(410), dans lequel
le programme informatique est utilisé pour exécuter le procédé de rappel d'informations du réfrigérateur intelligent selon l'une quelconque des revendications 1 à 5 après démarrage.
